# EUROPEAN PATENT SPECIFICATION

(11) **EP 0 370 685 B1**
(45) Date of publication and mention of the grant of the patent: **06.04.1994**
(21) Application number: 89311816.6
(22) Date of filing: 15.11.1989
(51) Int. Cl.: F16C 1/22

(54) **Cable adjuster**
Kabel-Justiervorrichtung
Dispositif d'ajustage de câble

(30) Priority: 23.11.1988 GB 8827383
(43) Date of publication of application: 30.05.1990
(73) Proprietor: QUINTON HAZELL plc, Nuneaton Warwickshire CV10 7QQ (GB)
(72) Inventor: Beard, Michael Andrew, Southam Warwickshire CV33 0HN (GB); Bambrook, Graham Stephen John, Leaminton Spa Warwickshire CV32 7SF (GB)
(74) Representative: Hands, Horace Geoffrey

(56) References cited:
- DE-A- 2 101 209
- FR-A- 2 553 479
- FR-A- 2 595 841
- US-A- 4 378 713

## Description

This invention relates to adjusters for Bowden cables. A Bowden cable consists of an inner part, herein called a wire, and a surrounding tubular outer part, herein called a sleeve. Such cables are used for example for vehicle clutch operation and in those situations the sleeve is held stationery and the wire moves axially along the sleeve. The wire is connected between the clutch operating member e.g. pedal at one end and some part of the clutch mechanism at the other end. As the clutch wears, extra movement is needed. Sometimes the actual travel required for clutch operation may remain constant but the location of the wire ends becomes progressively further away from the position occupied before any wear had occurred. In either situation adjustment may be made so as to keep the operating member in the same position, by varying the relative length of the wire and sleeve or displacing one end of the sleeve to a new adjusted position.

In the prior art, one method of adjustment has been provided by a nipple fixed to the wire by a screw, allowing release, re-positioning of the nipple and retightening of the screw. This has the disadvantage that in order to clamp sufficiently tight it is necessary for the screw to bite into the wire which may be difficult or may damage the wire. Correct screw pressure is extremely critical.

Another prior art method is to locate one sleeve end in a screw adjuster, usually a male screwthreaded tube forming a continuation of the sleeve and engaged in a female threaded lug so as to form an end stop for the cable. A locknut fixes the position. Adjustment can be difficult if the end stop is inaccessible.

Other arrangements have provided the equivalent of a screwthread on a formation of the sleeve itself, in attempts to provide the same effect but at reduced cost.

Another prior art proposal is US-A-4,378,713 which provides automatic adjustment. In this case the inner wire of the Bowden cable is connected to a yoke, the actual clutch or like mechanism has an actuator wire generally co-axial with the Bowden cable and provided with a termination having a serrated end, and that end extends into the yoke. A loose collar surrounds the serrated part and is pivoted eccentrically on the yoke. Two springs are provided, one for returning the yoke to a position in which the collar is loose on the serrated portion and the second for displacing the serrated portion relative to the yoke when the collar is loose. These parts are located in a housing which could be fixed to a bulk head or like for example via a shoulder on the housing, so that the cable and actuator extend normally of the housing shoulder. In operation, tension applied to the Bowden inner wire displaces the yoke and tilts the collar to wedge on the serrated portion and thereafter displace the said actuator wire with the Bowden wire. When the tension is released, the parts return, and the second spring then takes up any wear or play by displacing the serrated part further within the collar.

One object of the invention is to provide improvements. Another object is to provide automatic adjustment.

According to the invention an automatic cable adjuster of the kind comprising a housing adapted to be fixed in a stationary position; a Bowden wire cable system extending axially through the housing and comprising an outer and an inner extending to the clutch or like which is to be actuated by the cable, and means for automatically adjusting the cable system to accommodate for play or wear by adjusting the relative positions of the said outer relative to the inner is
characterised in that
said housing supports a starlock washer having tips engaged with the outer or with a tubular guide forming an extension of the outer, in a manner which normally prevents displacement of the outer relative to the housing and a release member in the form of a tube guided for sliding in said housing and having one end adapted for engagement with the clutch or like operating part and the other end arranged to engage the said tips whereby wear or play which results in the part coming into contact with the said one end of the release member disengages said tips to free said outer or guide and a compression spring surrounding said guide and extending effectively between the starlock washer and the said guide or outer to cause the said guide or outer to move when so freed.

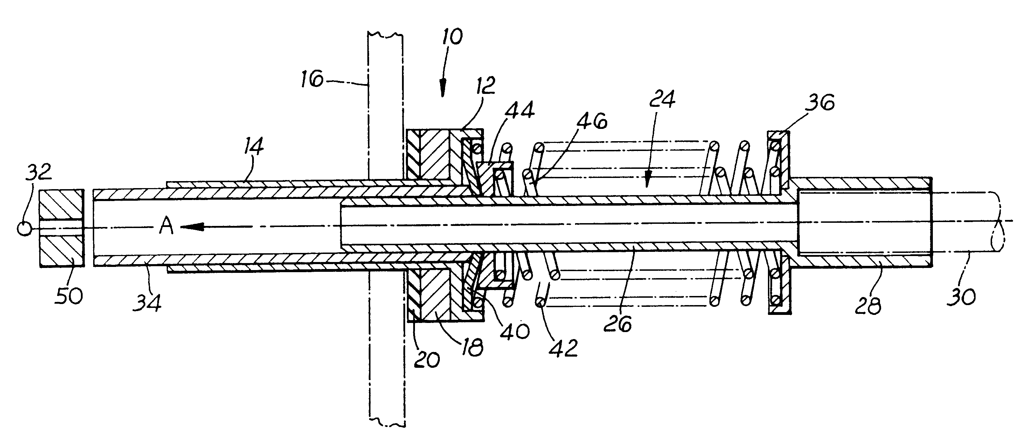

One embodiment of the invention is now more particularly described with reference to the accompanying drawing wherein the sole Figure is a sectional elevation of an adjuster mechanism for a Bowden cable.

Referring to the drawing, the part shown is intended for use as an automatic clutch adjuster for a motor vehicle. The adjuster shown comprises a housing generally indicated by the reference numeral 10 which comprises a cup 12 and a tube 14 extending concentrically of the cup and from the base thereof. This housing 10 is to be located and possibly fixed in relation to a vehicle bulkhead shown in dash lines at 16. Any required spacer 18 and washers 20 may be provided between the cup and the bulkhead in order to give a desired axial location according to circumstances.

The adjuster further comprises a locking tube generally indicated by the reference numeral 24 and which comprises a smaller diameter tubular portion 26 and a larger diameter tubular portion 28. The portion 28 is dimensioned internally to receive one end of the sleeve of the Bowden cable therein, so that the sleeve extends away generally as indicated in the chain dot line at 30. The wire of the cable extends throughout the adjuster and is connected for example by a fixed nipple to the clutch pedal mechanism in the vicinity of the reference 32 at the left hand side of the adjuster as illustrated.

The adjuster further comprises a release member 34 which is tubular, is a free sliding fit in the tube 14, and receives the smaller diameter portion 26 of the locking tube in its bore, also as a free sliding fit therein.

A spring abutment 36 is a shallow cup located on the locking tube and seating against a shoulder formed adjacent the junction of the two different diameter portions.

A starlock washer 40 is located in the cup 12 and this washer has a generally domed or conical shape with a series of prongs projecting radially inwardly and with the tips of those prongs engaged with the locking sleeve. Hence the prongs are inclined to the plane containing the outer periphery of the washer. The release member 34 has one end abutting the starlock washer adjacent the free ends of those prongs.

A pair of helical compression springs is employed, namely an outer spring 42 which extends between the spring abutment cup 36 at one end and the outer periphery of the starlock washer at the other end, and this spring 42 serves to retain the starlock washer in the housing.

A loose abutment washer 44 is located on the locking sleeve and has a frusto conical face of wider angle than the cone of the starlock washer adjacent the starlock washer and its opposite face forms a cup to receive and locate one end of the inner spring 46. The opposite end of that spring also seats on the spring abutment cup 36. The washer 44 abuts the ends of the prongs adjacent to the locking sleeve so that those prongs are in effect trapped between the washer and the release member at their tips.

A spacer washer such as 50 may be located on the wire and between the nipple on the wire and the release member, or the part 50 may be considered to be the actual clutch actuating part itself, fixed to the wire e.g. by a nipple 32.

When installed, the parts are adjusted so that with the clutch engaged the nipple (or clutch actuating member) in the position 32 contacts the spacer 50 which contacts the end of the release member 34. When the clutch is operated, that is disengaged, the wire moves in the direction of the arrow A applying a compressive load to the Bowden sleeve 30. Any tendency for the locking tube 26 to slide in the release member 34 is resisted by the starlock washer and the tips of the prongs which frictionally engage the part 26.

During wear of the clutch the clutch end of the wire, i.e. the opposite end of the wire to the point 32 moves progressively away from the adjuster, so that increasing pressure is applied on the release member 34 until the right hand end of the same (in the drawing) displaces the prongs to ease their frictional engagement to enable the springs 42,46 to displace the locking sleeve so as to draw it through the starlock washer effectively lengthening the Bowden sleeve which has the same effect as shifting the point 32 away from the adjuster again so as to reduce the load applied to the starlock washer allowing the prongs to grip and lock the adjuster in the new position. The inclination of the prongs makes the possible movement of the locking tube unidirectional.

Hence the adjuster of the present invention provides automatic self-adjustment of the Bowden cable. In ordinary use of a clutch the wear rate is expected to be low and each adjustment may be over a relatively small distance.

## Claims

1. An automatic cable adjuster of the kind comprising a housing (10) adapted to be fixed in a stationary position, a Bowden wire cable system extending axially through the housing and comprising an outer (30) and an inner (32) extending to a clutch or the like which is to be actuated by the inner (32), and means for automatically adjusting the cable system to accommodate for play or wear by adjusting the relative positions of the said outer (30) relative to the inner (32)
characterised in that
said housing (10) supports a starlock washer (40) having tips engaged with the outer (30) or with a tubular guide (26) forming an extension of the outer (30), in a manner which normally prevents displacement of the outer (30) relative to the housing (10), and a release member (34) in the form of a tube guided for sliding in said housing (10) and having one end adapted for engagement with a clutch actuating member or like operating part (50) and the other end arranged to engage the said tips, whereby wear or play which results in the operating part (50) coming into contact with the said one end of the release member (34) disengages said tips to free said outer (30) or guide (26) and a compression spring (42) surrounding said outer (30) or guide (26) and extending effectively between the starlock washer (40) and the said guide (26) or outer (30) to cause the said guide (26) or outer (30) to move when so freed.

2. An adjuster as claimed in Claim 1 wherein another compression spring (46) surrounds said guide (26) and extends effectively between the tips of the starlock washer (40) and an abutment on the said guide (26) or outer (30).

## Patentansprüche

1. Automatische Kabel-Einstellvorrichtung, enthaltend
ein Gehäuse (10), das in einer stationären Position angeordnet werden kann,
ein Bowden-Kabelzugsystem, das sich in axialer Richtung durch das Gehäuse erstreckt und einen äußeren Teil (30) und einen inneren Teil (32) enthält, die sich zu einer Kupplung oder ähnlichem erstrecken, die vom inneren Teil (32) betätigt wird,
und eine Einrichtung zur automatischen Einstellung des Kabelsystems unter Berücksichtigung von Spiel und Verschleiß, indem die Relativposition des äußeren Teils (30) gegenüber dem inneren Teil (32) eingestellt wird,
dadurch gekennzeichnet,
daß das Gehäuse (10) folgende Teile enthält: eine zahnartig ausgebildete Sperr-Zwischenscheibe (40), deren Zähne mit dem äußeren Teil (30) oder mit einer den äußeren Teil (30) verlängernden, rohrartigen Führung (26) so in Eingriff kommen, daß üblicherweise ein Verschieben des äußeren Teils (30) gegenüber dem Gehäuse (10) verhindert wird,
ein Löseelement (34) in Form einer Rohrführung, das innerhalb des Gehäuses (10) gleitet und ein Ende aufweist, das mit einem Kupplungs-Betätigungselement oder einem ähnlichen Bedienungsteil (50) in Eingriff kommen kann, und das mit dem anderen Ende mit den Zähnen in Eingriff kommen kann, so daß sich Verschleiß oder Spiel, die sich aus dem Kontakt des Bedienungsteils (50) mit dem einen Ende des Löseelements (34) ergeben, die Zahne lösen und auf diese Weise das äußere Teil (30) oder die Führung (26) freisetzen,
und eine Druckfeder (42), die das äußere Teil (30) oder die Führung (26) umgibt und sich effektiv zwischen der Sperr-Zwischenscheibe (40) und der Führung (26) oder dem äußeren Teil (30) erstreckt und es auf diese Weise ermöglicht, daß sich die Führung (26) oder das äußere Teil (30) bewegen, sobald sie derart freigesetzt sind.

2. Einstellvorrichtung nach Anspruch 1, wobei eine andere Druckfeder (46) die Führung (26) umgibt und sich effektiv Zwischen den Zähnen der Sperr-Zwischenscheibe (40) und einem Anschlag auf der Führung (26) oder dem äußeren Teil (30) erstreckt.

## Revendications

1. Dispositif d'ajustage automatique de câble, du type comprenant un logement (10) conçu pour être fixé dans une position immobile, un système de câble Bowden traversant axialement le logement et comprenant un élément extérieur (30) et un élément intérieur (32) se prolongeant vers un embrayage ou similaire destiné à être actionné par l'élément intérieur (32), et des moyens pour régler automatiquement le système de câble afin de rattraper le jeu ou l'usure par réglage des positions relatives du dit élément extérieur (30) et de l'élément intérieur (32),
caractérisé en se que
le dit logement (10) supporte une rondelle de verrouillage (40) dont les sommets engagent l'élément extérieur (30) ou un guide tubulaire (26) constituant un prolongement de l'élément extérieur (30), de façon à empêcher normalement le déplacement de l'élément extérieur (30) par rapport au logement (10), et un organe de libération (34) on forme de tube guidé pour coulisser à l'intérieur du logement (10) et dont une extrémité est conçue pour engager un organe d'actionnement d'embrayage ou un élément d'actionnement similaire (50) alors que son autre extrémité est conçue pour engager les dits sommets, de sorte que l'apparititon d'usure ou de jeu ayant pour résultat la venue en contact de la partie d'actionnement (50) avec la dite extrémité de l'organe de libération (34) dégage les dits sommets, pour libérer le dit élément extérieur (30) ou le guide (26), et un ressort de compression (42) qui entoure le dit élément extérieur (30) ou guide (26) et qui s'étend efficacement entre la rondelle de verrouillage (40) et le dit guide (26) ou élément extérieur (30), pour forcer le dit guide (26) ou élément extérieur (30) à se déplacer quand il est ainsi libéré.

2. Dispositif d'ajustage selon la revendication 1, dans lequel un autre ressort de compression (46) entoure le dit guide (26) et s'étend efficacement entre les extrémités de la rondelle de verrouillage (40) et une partie d'aboutement du dit guide (26) ou élément extérieur (30).
